# EUROPEAN PATENT SPECIFICATION

(11) **EP 2 799 485 B1**
(45) Date of publication and mention of the grant of the patent: **23.03.2016**
(21) Application number: 13165931.0
(22) Date of filing: 30.04.2013
(51) Int. Cl.: C08L 23/04, C08L 23/06, H01B 3/44, C08K 3/22

(54) **Polymer composition and a cable spacer comprising the polymer composition**
Polymerzusammensetzung und Kabelabstandhalter mit der Polymerzusammensetzung
Composition polymère et espaceur de câble comprenant la composition du polymère

(43) Date of publication of application: 05.11.2014
(73) Proprietor: SCG Chemicals Co., Ltd., Bangkok 10800 (TH)
(72) Inventor: Angkitpaiboon, Yaowaman, 10800 Bangsue Bangkok (TH); Kumkrong, Attawut, 10800 Bangsue Bangkok (TH)
(74) Representative: Scholz, Volker

(56) References cited:
- EP-A1- 1 267 189
- EP-A1- 1 739 691
- WO-A1-97/49764
- US-A1- 2006 178 482

## Description

The present invention relates to a polymer composition and a cable spacer comprising the polymer composition.

Cable spacers are used for space aerial cable (SAC) installation. The cable spacer separates cables from each other, hence, several circuits can be installed on the same electrical poles and distances between cables can be reduced. Cable spacer must support cable's weight and protect sagging of SAC. Porcelain and polyethylene cable spacers are widely used.

Although Porcelain cable spacer is mechanically stronger than the polyethylene type, Porcelain can induce partial discharge to cable sheath and also substantially higher cost. Porcelain has higher dielectric constant than Polyethylene, so cable sheath has stress from electric field. Noted, a cable used with these cable spacers makes from aluminum wire with crosslink polyethylene insulator and polyethylene sheet. (at least 2% carbon). Then deterioration of cable sheath may lead to voltage breakdown and short circuit.

However, existing polyethylene cable spacer in the market has not qualified. Problem and consequence of existing polyethylene cable spacer are brittle, weakness, color fading, tracking occur, etc.

US 7,155,092 B2 discloses the polyethylene composition for optical cable comprising bimodal polyethylene, metal oxide and carbon black.

US 3,553,348 A discloses ethylene polymer composition comprising ethylene/viny acetate copolymer, a cross-linking agent, a filler selected from calcium, magnesium and aluminium silicate and aluminium oxide and alkoxysilane.

US 2012/12363 A1 discloses polyethylene resin composition for a power cable, which is applicable to an insulating layer, a semi-conduction layer or a sheath layer. This composition comprises a linear medium-density polyethylene and one or more additive(s) selected from a flame retardant, an oxidation stabilizer, a UV stabilizer, a heat stabilizer and process aid.

CN 102153812 A discloses a polyolefin sheathing compound which comprises ethylene-propylene-diene rubber 60-90 % by weight, high density polyethylene 5-25 % by weight, functional polyolefin resin 5-15 % by weight, flame retardant 180-200 % by weight, surface modifier 1-3 % by weight, crosslinking agent 0.01-0.05 % by weight, antioxidant 0.5-2 % by weightand processing aid 1.5-9% by weight.

CN 102167861 A discloses a flame-retardant bimodal polyethylene composite material which comprises bimodal polyethylene 50-85 % by weight, flame retardant 10-40 % weight, thermal stabilizer 0.2-1.0 % by weight, processing assistant 0.1-1.0 % by weight, functional assistant 0.1-10 % weight and filing modifier 0-30 % by weight.

It is an object of the present invention to provide a polymer composition which can be used in cable spacer overcoming the drawbacks of the prior art. In particular, a polymer composition shall be provided having improved mechanical properties, good weather resistance, UV protection and anti-tracking properties.

This object has been achieved by a polymer composition comprising: a) 1-90 parts by weight of a bimodal polyethylene; b) 1-20 parts by weight of an ethylene-octene copolymer having a MFI of 0.2-30 g/10 min; and c) 1-15 parts by weight, preferably 1-13 parts by weight, more preferably 3-10 parts by weight, of an anti-tracking filler.

Melt flow index (MFI) in terms of the present invention relates to a MFI determined by ASTM D-1238 (measured at 2,16 kg and 190°C). This standard method for determining melt flow indices is well known in the art.

Preferably, the bimodal polyethylene comprises aa) a low molecular weight ethylene polymer having a density of 0.950-0.960 g/cm³ and having a MFI of 500-900 g/10 min; and bb) a high molecular weight ethylene polymer having a density of 0.950-0.980 g/cm³ and having MFI of 0.01-10 g/10 min.

In a preferred embodiment, the bimodal polyethylene contains a co-monomer selected from butene, hexene, octene or mixture thereof, preferably in an amount of 1-10 parts by weight.

More preferably, the bimodal polyethylene further contains 1-10 parts by weight of ethylene.

In a further embodiment the low molecular weight ethylene polymer has a density of 0.954-0.960 g/cm³, preferably of 0.956-0.958 g/cm³.

It is preferred that the low molecular weight ethylene polymer has a MFI of 600-800 g/10 min, preferably of 700-800 g/10min.

More preferably, the high molecular weight ethylene polymer has a density of 0.952-0.958 g/cm³, preferably of 0.954-0.958 g/cm³.

Most preferably, the high molecular weight ethylene polymer has a MFI of 0.01-1.0 g/10 min, preferably of 0.02-0.08 g/10 min.

Even preferred, the ethylene-octene copolymer contains 60-90 parts by weight of ethylene and 10-40 parts by weight of octene, preferably 70-80 parts by weight of ethylene and 20-30 parts by weight of octene.

Preferably, the ethylene-octene copolymer has a MFI of 0.3-1.0 g/10 min.

Further preferred, the ethylene-octene copolymer has a density in a range of 0.863-0.870 g/cm³, more preferably of 0.863-0.869 g/cm³.

Preferably, the anti-tracking filler is a group IIA, IIIA, IVA, IVB or VIB element oxide or hydroxide or mixtures thereof, preferably the anti-tracking filler is silica, alumina, beryllium oxide, calcium oxide, chromium oxide, magnesium oxide, nickel oxide, aluminum silicate clay, magnesium hydroxide, aluminum hydroxide or mixtures thereof, most preferably is magnesium hydroxide.

Further preferred, the anti-tracking filler is comprised in an amount of 1-13 parts by weight and more preferably 3-10 parts by weight.

Even preferred, the polymer composition comprises 0.01-5.00 parts by weight of further additives, preferably selected from the group consisting of UV stabilizers, antioxidants, antistatic agents, waxes, pigments, or mixtures thereof.

Preferred UV stabilizers are e.g. hydroxyphenyl benzoltriazole or hydroxyphenyl benzophenon, hindered amines (HALS) and the like. Most preferred, additives may made up to about 1-2 weight percent of the total composition based on polymeric components, anti-tracking fillers and additives

In a preferred embodiment, the ratio of low molecular weight ethylene polymer to high molecular weight ethylene polymer is from 10:1 to 1:10.

The object is further achieved by a cable spacer comprising an inventive polymer composition.

It was surprisingly found that the inventive polymer composition allows preparation of cable spacers having significantly improved properties, such as mechanical properties, weather resistance, UV protection and anti-tracking properties.

Compounding of cable spacer material can be prepared by blending the polymer ingredients, the filler metal oxide and optional additives by use of conventional mastication equipment, for example, Brabender mixer, Banbury mixer, Buss-Ko Kneader, Farrel continuous mixer or twin screw continuous mixer. Mixing times should be sufficient to obtain homogeneous blends and can be determined by a person skilled in the art without any burden.

Preferred, the cable spacer is an injection cable spacer, meaning that the cable spacer is prepared by injection molding process. Injection molding is a manufacturing process for producing parts by injecting materials into a mold, well known in the art.

Additional features and advantages of the present invention will become apparent in the following detailed description on the basis of examples.

### Examples

A bimodal polyethylene forming the matrix for cable spacer according to the present invention was produced according to the following procedure.

In a polymerization plant consisting of reactors connected in series to a slurry-phase reactor using a Ziegler-Natta catalyst, this bimodal polymer was polymerized under the following condition.

### The first reactor

In the first reactor, a first polymer was produced by the polymerization of ethylene in the pressure of hydrogen. The molar ratio of hydrogen to ethylene was 9.23. The resulting ethylene homopolymer had a density of 956-0.960 g/cm3 and melt flow index of 700-800g/10min.

### The second reactor

In the second reactor, a second polymer was produced by the polymerization of ethylene and butane. The molar ratio of hydrogen to ethylene was 0.10 while butane is 1.54% wt. of ethylene in the second reactor. The resulting copolymer of ethylene and butane was mixed with the ethylene homopolymer from the first reactor, the weight ratio of polymer from the first reactor to polymer from the second reactor being 49.5 :50.5

The bimodal mixture of polymer from the first reactor and polymer from the second reactor, as mentioned above, had a density 0.954-0.958 g/cm³ and melt flow rate 0.02-0.08 g/10 min.

### Example 1

The polyethylene for cable spacer was prepared by Twin screw extruder at the temperature of 140/180/180/180/200/200/180/180/180/180/180°C 95 wt % of bimodal polyethylene with a density of 0.954-0.958 g/cm³ and MFI of 0.02-0.08 g/10 min, 5 wt % of ethylene-octene copolymer with a density of 0.863-0.870 g/cm³ and MFI of 0.3-1.0 g/10 min.

### Example 2

The polyethylene for cable spacer was prepared by Twin screw extruder at the temperature of 140/180/180/180/200/200/180/180/180/180/180°C 90wt % of bimodal polyethylene with a density of 0.954-0.958 g/cm³ and MFI of 0.02-0.08 g/10 min, 5 wt % of ethylene-octene copolymer with a density of 0.863-0.870 g/cm³ and MFI of 0.3- 1.0 g/10 min, and 5 wt% of magnesium oxide

### Example 3

The polyethylene for cable spacer was prepared by Twin screw extruder at the temperature of 140/180/180/180/200/200/180/180/180/180/180°C 87 wt % of bimodal polyethylene with a density of 0.954-0.958 g/cm³ and MFI of 0.02-0.08 g/10 min, 5 wt % of ethylene-octene copolymer with a density of 0.863-0.870 g/cm³ and MFI of 0.3- 1.0 g/10 min, and 8 wt% of magnesium oxide

### Example 4

The polyethylene for cable spacer was prepared by Twin screw extruder at the temperature of 140/180/180/180/200/200/180/180/180/180/180°C 85 wt % of bimodal polyethylene with a density of 0.954-0.958 g/cm³ and MFI of 0.02-0.08 g/10 min and 15 wt% of magnesium oxide.

### Test results

### Tracking test

The samples were tested according to the standard method IEC 60587. This test evaluates resistance to tracking and erosion of electrical insulating materials used under severe ambient conditions. For this study, 5 pieces of sample were done inclined planes testing at 4.5 kV and classify by their survival must more than 6 h.

**TABLE 1 test result**

| Sample | 1 | 2 | 3 | 4 |
|---|---|---|---|---|
| TSB | 398 | n/a | 356 | 250 |
| ELB | 828 | n/a | 799 | 699 |
| Tracking | Fail | Pass | Pass | n/a |

TSB in this regard is tensile at break in kg/cm³. ELB in this regard is elongation at break in %. Both properties were measured by universal tensile testing machine according to standard ASTM D638.

Comparative sample 1 had no anti-tracking filler, show failure of Track resistance testing, which indicated important of Anti-track filler for application use.

Comparative sample 4 had no copolymer. It can be seen that the measured elongation at break, tensile strength. This is indicative of poor coupling and leading to application problems. It can be seen that this composition having 15 wt % content of magnesium oxide shows poor mechanical property.

Samples 2 and 3 according to the invention show a good/high elongation and tensile strength indicative of adequate/good tracking resistance performance and properly UV protection.

It can be seen from Table 1 that the invention in particular provides a polymer composition combining an elongation at break above 700, a tensile strength above 25 and track resistance acted, all measured as indicated hereinabove. In addition, the inventive present invention is the amount reduction of metal oxide to be lower than 15 % wt showing good mechanical property.

The samples were tested Environmental Stress-Cracking Resistance (ESCR) according to standard method ASTM D1693. It was found that ESCR (F25) was about 10000 hr. The results are indicated as the percentage of cracked sample rods at a giving time. F₂₅ mean that 25% of the sample rods were failure after the time indicate.

The features disclosed in the foregoing description, in the claims and/or in the accompanying drawings may, both separately an in any combination thereof, be material for realising the invention in diverse forms thereof.

## Claims

1. Polymer composition comprising:
a) 1-90 parts by weight of a bimodal polyethylene
b) 1-20 parts by weight of an ethylene-octene copolymer having a melt flow index (MFI) determined by ASTM D-1238 of 0.2-30 g/10 min; and
c) 1-15 parts by weight, preferably 1-13 parts by weight, of an anti-tracking filler.

2. Polymer composition according to claim 1, wherein the bimodal polyethylene comprises
aa) a low molecular weight ethylene polymer having a density of 0.950-0.960 g/cm³ and having a MFI of 500-900 g/10 min; and
bb) a high molecular weight ethylene polymer having a density of 0.950-0.980 g/cm³ and having a MFI of 0.41-10 g/10 min

3. Polymer composition according to claim 1 or 2, wherein the bimodal polyethylene contains a co-monomer selected from butene, hexene, octene or mixture thereof, preferably in an amount of 1-10 parts by weight.

4. Polymer composition according to any of the preceding claims, wherein the bimodal polyethylene further contains 1-10 parts by weight of ethylene.

5. Polymer composition according to any of the preceding claims, wherein the low molecular weight ethylene polymer has a density of 0.954-0.960 g/cm³, preferably of 0.956-0.958 g/cm³.

6. Polymer composition according to any of the preceding claims, wherein the low molecular weight ethylene polymer has a MFI of 600-800 g/10 min, preferably of 700-800 g/10min.

7. Polymer composition according to any of the preceding claims, wherein the high molecular weight ethylene polymer has a density of 0.952-0.958 g/cm³, preferably of 0.954-0.958 g/cm³.

8. Polymer composition according to any of the preceding claims, wherein the high molecular weight ethylene polymer has a MFI of 0.01-1.0 g/10 min, preferably of 0.02-0.08 g/10 min.

9. Polymer composition according to any of the preceding claims, wherein the ethylene-octene copolymer contains 60-90 parts by weight of ethylene and 10-40 parts by weight of octene, preferably 70-80 parts by weight of ethylene and 20-30 parts by weight of octene.

10. Polymer composition according to any of the preceding claims, wherein the ethylene-octene copolymer has a MFI of 0.3-1.0 g/10 min.

11. Polymer composition according to any of the preceding claims, wherein the ethylene-octene copolymer has a density in a range of 0.863-0.870 g/cm³, preferably of 0.863-0.869 g/cm³.

12. Polymer composition according to any of the preceding claims, wherein the anti-tracking filler is a group IIA, IIIA, IVA, IVB or VIB element oxide or hydroxide or mixtures thereof, preferably the anti-tracking filler is silica, alumina, beryllium oxide, calcium oxide, chromium oxide, magnesium oxide, nickel oxide, aluminum silicate clay, magnesium hydroxide, aluminum hydroxide or mixtures thereof, most preferably is magnesium hydroxide.

13. Polymer composition according to any of the preceding claims, wherein anti-tracking filler is comprised in an amount of 1-13 parts by weight and more preferably 3-10 part by weight.

14. Polymer composition according to any of the preceding claims, wherein the ratio of low molecular weight ethylene polymer to high molecular weight ethylene polymer is from 10:1 to 1:10.

15. Cable spacer comprising a polymer composition according to any of the preceding claims.

## Patentansprüche

1. Polymerzusammensetzung, umfassend:
a) 1 - 90 Gewichtsteile eines bimodalen Polyethylens
b) 1 - 20 Gewichtsteile eines Ethylen-Octen-Copolymers, das einen Schmelzflussindex (MFI), bestimmt nach ASTM D-1238, von 0,2 - 30 g/10 min hat; und
c) 1 - 15 Gewichisteile, vorzugsweise 1 - 13 Gewichtsteile, eines Anti-Kriechwegfüllers.

2. Polymerzusammensetzung nach Anspruch 1, wobei das bimodale Polyethylen umfasst
aa) ein Ethylenpolymer von geringem Molekulargewicht, das eine Dichte von 0,950 - 0,960 g/cm³ und einen MFI von 500 - 900 g/10 min hat; und
bb) ein Ethylenpolymer von hohem Molekulargewicht, das eine Dichte von 0,950 - 0,980 g/cm³ und einen MFI von 0,01 - 10 g/10 min hat.

3. Polymerzusammensetzung nach einem der Ansprüche 1 oder 2, wobei das bimodale Polyethylen ein Comonomer umfasst, das ausgewählt ist aus Buten, Hexen, Octen oder Mischungen derselben, vorzugsweise in einer Menge von 1-10 Gewichtsteilen.

4. Polymerzusammensetzung nach einem der vorangehenden Ansprüche, wobei das bimodale Polyethylen ferner 1 - 10 Gewichtsteile Ethylen umfasst.

5. Polymerzusammensetzung nach einem der vorangehenden Ansprüche, wobei das Ethylenpolymer von niedrigem Molekulargewicht eine Dichte von 0,954 - 0,960 g/cm³, vorzugsweise von 0,956 - 0,958 g/cm³, hat.

6. Polymerzusammensetzung nach einem der vorangehenden Ansprüche, wobei das Ethylenpolymer von niedrigem Molekulargewicht einen MFI von 600 - 800 g/10 min, vorzugsweise von 700 - 800 g/10 min, hat.

7. Polymerzusammensetzung nach einem der vorangehenden Ansprüche, wobei das Ethylenpolymer von hohem Molekulargewicht eine Dichte von 0,952 - 0,958 g/cm³, vorzugsweise von 0,954 - 0,958 g/cm³, hat.

8. Polymerzusammensetzung nach einem der vorangehenden Ansprüche, wobei das Ethylenpolymer von hohem Molekulargewicht einen MFI von 0,01 - 1,0 g/10 min, vorzugsweise von 0,02 - 0,08 g/10 min, hat.

9. Polymerzusammensetzung nach einem der vorangehenden Ansprüche, wobei das Ethylen-Octen-Copolymer 60 - 90 Gewichtsteile Ethylen und 10-40 Gewichtsteile Octen enthält, vorzugsweise 70 - 80 Gewichtsteile Ethylen und 20 - 30 Gewichtsteile Octen umfasst.

10. Polymerzusammensetzung nach einem der vorangehenden Ansprüche, wobei das Ethylen-Octen-Copolymer einen MFI von 0,3 - 1,0 g/10 min hat.

11. Polymerzusammensetzung nach einem der vorangehenden Ansprüche, wobei das Ethylen-Octen-Copolymer eine Dichte in einem Bereich von 0,863 - 0,870 g/cm³, vorzugsweise von 0,863 -- 0,869 g/cm³, hat.

12. Polymerzusammensetzung nach einem der vorangehenden Ansprüche, wobei der Anti-Kriechwegfüller ein Oxid oder Hydroxid eines Elements der Gruppen IIA, IIIA, IVA, IVB oder VIB oder Mischungen derselben ist, vorzugsweise der Anti-Kriechwegfüller Siliziumdioxid, Aluminumoxid, Berylliumoxid, Calciumoxid, Chromoxid, Magnesiumoxid, Nickeloxid, Aluminiumsilicatton, Magnesiumhydroxid, Aluminiumhydroxid oder Mischungen derselben, am meisten bevorzugt Magnesiumhydroxid ist.

13. Polymerzusammensetzung nach einem der vorangehenden Ansprüche, wobei der Anti-Kriechwegfüller in einer Menge von 1 - 13 Gewichtsteilen und darüber hinaus bevorzugt 3 - 10 Gewichtsteilen umfasst ist.

14. Polymerzusammensetzung nach einem der vorangehenden Ansprüche, wobei das Verhältnis des Ethylenpolymers von niedrigem Molekulargewicht zu dem Ethylenpolymer von hohem Molekulargewicht von 10 : 1 bis 1 : 10 ist.

15. Kabelabstandshalter, umfassend eine Polymerzusammensetzung nach einem der vorangehenden Ansprüche.

## Revendications

1. Composition de polymère comprenant :
a) 1 à 90 parties en poids d'un polyéthylène bimodal
b) 1 à 20 parties en poids d'un copolymère d'éthylène-octène ayant un indice de fluidité (MFI) déterminé selon ASTM D-1238, compris entre 0,2 et 30 g/10 min ; et
c) 1 à 15 parties en poids, de préférence 1 à 13 parties en poids, d'une charge de remplissage anti-cheminement.

2. Composition de polymère selon la revendication 1, dans laquelle le polyéthylène bimodal comprend
aa) un polymère d'éthylène de faible poids moléculaire ayant une densité comprise entre 0,950 et 0,960 g/cm³ et ayant un indice de fluidité compris entre 500 et 900 g/10 min ; et
bb) un polymère d'éthylène de poids moléculaire élevé ayant une densité comprise entre 0,950 et 0,980 g/cm³ et ayant un indice de fluidité compris entre 0,01 et 10 g/10 min

3. Composition de polymère selon la revendication 1 ou 2, dans laquelle le polyéthylène bimodal contient un co-monomère sélectionné parmi le butène, l'hexène, l'octène ou un mélange de ceux-ci, de préférence dans une quantité comprise entre 1 et 10 parties en poids.

4. Composition de polymère selon l'une quelconque des revendications précédentes, dans laquelle le polyéthylène bimodal contient en outre 1 à 10 parties en poids d'éthylène.

5. Composition de polymère selon l'une quelconque des revendications précédentes, dans laquelle le polymère d'éthylène de faible poids moléculaire a une densité comprise entre 0,954 et 0,960 g/cm³, de préférence entre 0,956 et 0,958 g/cm³.

6. Composition de polymère selon l'une quelconque des revendications précédentes, dans laquelle le polymère d'éthylène de faible poids moléculaire a un indice de fluidité compris entre 600 et 800 g/10 min, de préférence entre 700 et 800 g/10min.

7. Composition de polymère selon l'une quelconque des revendications précédentes, dans laquelle le polymère d'éthylène de poids moléculaire élevé a une densité comprise entre 0,952 et 0,958 g/cm³, de préférence entre 0,954 et 0,958 g/cm³.

8. Composition de polymère selon l'une quelconque des revendications précédentes, dans laquelle le polymère d'éthylène de poids moléculaire élevé a un indice de fluidité compris entre 0,01 et 1,0 g/10 min, de préférence entre 0,02 et 0,08 g/10 min.

9. Composition de polymère selon l'une quelconque des revendications précédentes, dans laquelle le copolymère d'éthylène-octène contient 60 à 90 parties en poids d'éthylène et 10 à 40 parties en poids d'octène, de préférence 70 à 80 parties en poids d'éthylène et 20 à 30 parties en poids d'octène.

10. Composition de polymère selon l'une quelconque des revendications précédentes, dans laquelle le copolymère d'éthylène-octène a un indice de fluidité compris entre 0,3 et 1,0 g/10 min.

11. Composition de polymère selon l'une quelconque des revendications précédentes, dans laquelle le copolymère d'éthylène-octène a une densité comprise entre 0,863 et 0,870 g/cm³, de préférence entre 0,863 et 0,869 g/cm³.

12. Composition de polymère selon l'une quelconque des revendications précédentes, dans laquelle la charge de remplissage anti-cheminement est un oxyde ou hydroxyde d'un élément du groupe IIA, IIIA, IVA, IVB ou VIB ou des mélanges de ceux-ci, de préférence la charge de remplissage anti-cheminement est de la silice, de l'alumine, de l'oxyde de béryllium, de l'oxyde de calcium, de l'oxyde de chrome, de l'oxyde de magnésium, de l'oxyde de nickel, de l'argile siliceuse d'aluminium, de l'hydroxyde de magnésium, de l'hydroxyde d'aluminium ou des mélanges de ceux-ci, plus préférablement est de l'hydroxyde de magnésium.

13. Composition de polymère selon l'une quelconque des revendications précédentes, dans laquelle la charge de remplissage anti-cheminement est dans une quantité comprise entre 1 et 13 parties en poids et plus préférablement entre 3 et 10 parties en poids.

14. Composition de polymère selon l'une quelconque des revendications précédentes, dans laquelle le rapport du polymère d'éthylène de faible poids moléculaire au polymère d'éthylène de poids moléculaire élevé est compris entre 10:1 et 1:10.

15. Écarteur de câble comprenant une composition de polymère selon l'une quelconque des revendications précédentes.
